Europäisches Patentamt

European Patent Office

Office européen des brevets

(19)

(11) Numéro de publication : **0 498 692 A1**

(12) **DEMANDE DE BREVET EUROPEEN**

(21) Numéro de dépôt : **92400203.3**

(22) Date de dépôt : **27.01.92**

(51) Int. Cl.⁵ : **B64F 1/305**

(30) Priorité : **31.01.91 FR 9101083**

(43) Date de publication de la demande :
**12.08.92 Bulletin 92/33**

(84) Etats contractants désignés :
**BE DE ES FR GB IT LU NL SE**

(71) Demandeur : **HUTCHINSON S.A. une Société Anonyme dotée d'un Conseil de Surveillance et d'un Directoire**
**2, rue Balzac**
**F-75008 Paris (FR)**

(72) Inventeur : **Petit, Jean-Claude**
**86, rue Joseph Hentges**
**F-59420 Mouvaux (FR)**

(74) Mandataire : **Orès, Bernard et al**
**Cabinet ORES 6, Avenue de Messine**
**F-75008 Paris (FR)**

(54) **Soufflet pour passerelle d'embarquement/débarquement de passagers d'un avion et dispositif d'actionnement d'un tel Soufflet.**

(57) Soufflet pour passerelle d'embarquement/ débarquement des passagers d'un avion, propre à être appliqué avec interposition d'un bourrelet périphérique (12) d'étanchéité sur le fuselage de l'avion en réponse à l'actionnement de deux mécanismes articulés indépendants l'un de l'autre et prévus sur les faces en regard du soufflet (10).

Chacun des mécanismes est constitué par un compas dont les branches (22, 23) sont articulées sur le cadre de la passerelle (P), d'une part, et sur la partie haute du soufflet, d'autre part, tandis que la tête du compas est attelée sur la tige d'un vérin (28) dont le corps est d'inclinaison réglable sur le cadre de la passerelle.

FIG.2

EP 0 498 692 A1

L'invention a pour objet un soufflet pour passerelle d'embarquement/débarquement de passagers d'un avion et un dispositif d'actionnement d'un tel soufflet. Elle a également pour objet une passerelle comportant un tel soufflet.

On sait que les passerelles d'embarquement et/ou débarquement des passagers d'un avion comportent à une extrémité de la passerelle proprement dite un soufflet en accordéon destiné à être appliqué sur le fuselage de l'avion, de part et d'autre d'une porte de l'appareil, pour assurer la protection des passagers qui y entrent ou qui en sortent à l'encontre des intempéries. Des soufflets pour de telles passerelles sont décrits, par exemple, dans NL-A-84 00266, DE-A1-3 023 885, FR-2 419 860, FR-2 521 950 ou FR-2 525 556. Dans les dispositifs que décrivent ces documents, certains font appel pour déployer et refermer le soufflet à des treuils à câbles ou à sangles (NL-8400266 ou FR-2 521 950) tandis que d'autres sont actionnés à partir de vérins hydrauliques auxquels sont associés des ressorts à gaz (FR-2 525 556). L'utilisation de treuils à câbles ou à sangles n'est pas, cependant, à l'abri de difficultés liées à la tension des câbles ou au fait que ceux-ci peuvent être emmêlés, tandis que les dispositifs à vérins hydrauliques et ressorts à gaz peuvent être sujets à des fuites, d'une part et, d'autre part, appliquent avec un effort irrégulier le boudin d'étanchéité que comporte le soufflet sur la carlingue de l'avion.

D'autre part, le Brevet US-4 333 195 décrit un soufflet pour passerelle d'embarquement et/ou débarquement de pasagers d'un avion destiné à se déployer sous l'action de ressorts lors d'un incendie et à entourer un soufflet de protection contre les intempéries. Le mécanisme de déploiement de ce soufflet comporte des compas dont les branches sont articulés sur le cadre. Etant dépourvu de moyens moteurs, le soufflet du Brevet US-4 333 195 n'est pas utilisable en tant que soufflet de protection contre les intempéries devant être manoeuvré fréquemment.

Le problème existe donc de fournir un soufflet de protection à l'encontre des intempéries pour passerelle d'embarquement et/ou débarquement de passagers d'un avion ainsi qu'un dispositif d'actionnement d'un tel soufflet quine présentent pas les inconvénients des dispositifs connus.

C'est, par conséquent, un but général de l'invention d'apporter une solution à ce problème et, en particulier, de fournir un soufflet pour passerelle d'embarquement et/ou débarquement des passagers d'un avion propre à s'adapter à la forme des différents appareils des flottes aériennes existantes.

C'est, également, un but de l'invention de fournir un soufflet dont le dispositif d'actionnement soit un système mécanique simple, sûr et d'un maniement aisé aussi bien lors du déploiement que du repliement.

C'est, encore, un but de l'invention de fournir un tel soufflet et son dispositif d'actionnement propres à équiper d'origine une passerelle d'accès aux avions d'une aérogare, ou encore propres à être substitués à une partie d'un ensemble déjà installé.

C'est, aussi, un but de l'invention de fournir un tel soufflet et son mécanisme d'actionnement qui assurent une bonne étanchéité du bourrelet d'extrémité du soufflet contre la carlingue de l'appareil avec lequel il doit coopérer.

C'est, enfin, un but de l'invention de fournir un tel soufflet et son mécanisme d'actionnement qui soient légers, faciles à entretenir, démunis de pièces d'usure et qui, en outre conservent un fonctionnement uniforme dans le temps, indépendant, notamment, des variations de température.

L'invention a principalement pour objet un soufflet pour passerelle d'embarquement/débarquement des passagers d'un avion, propre à être appliqué avec interposition d'un bourrelet périphérique d'étanchéité sur le fuselage de l'avion en réponse à l'actionnement de deux mécanismes articulés prévus sur les faces en regard du soufflet, chacun des mécanismes étant constitué par un compas dont les branches sont articulées sur le cadre de la passerelle, d'une part, et sur la partie haute du soufflet, d'autre part, caractérisé en ce que ledit soufflet est un soufflet de protection contre les intempéries, en ce que les deux mécanismes sont indépendants l'un de l'autre et en ce que la tête du compas est attelée sur la tige d'un vérin dont le corps est d'inclinaison réglable sur le cadre de la passerelle.

Dans une forme de réalisation préférée le vérin est un vérin à vis, à commande électrique, muni d'un limiteur d'effort incorporé, ou d'un contact de fin de course, réglable à la sortie et à la rentrée de la tige dans le corps de vérin.

Le moteur de commande du vérin est, de préférence, un moteur frein.

Dans une variante, le vérin est un vérin hydraulique.

Selon une autre caractéristique de l'invention, le compas est réalisé à l'aide de barres tubulaires munies à leurs extrémités de rotules à bouts filetés permettant d'ajuster l'entre-axe des barres.

Dans une forme de réalisation préférée, la tête de compas est reliée à la tige de vérin par une chape tandis que l'inclinaison variable du corps de vérin est obtenue par un montage articulé des tenons dudit corps sur un support muni de bagues en polytétrafluoroéthylène (Téflon, une Marque déposée de la Société DUPONT DE NEMOURS).

L'invention sera bien comprise par la description qui suit, faite à titre d'exemple et en référence au dessin annexé, dans lequel :

la figure 1 est une vue schématique d'un des mécanismes latéraux d'un soufflet selon l'invention ;

la figure 2 est une vue en coupe d'une passerelle munie d'un soufflet selon l'invention dans deux conditions différentes ;

la figure 3 est une vue, par l'extérieur, d'une passerelle équipée d'un soufflet selon l'invention.

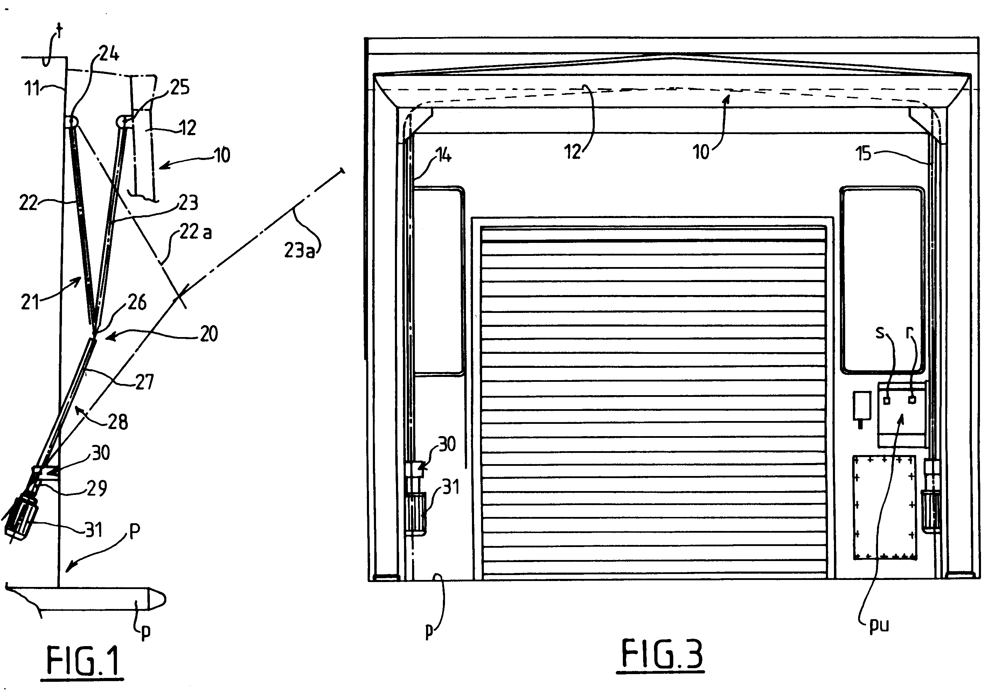

On se réfère d'abord à la figure 1 qui illustre schématiquement la structure des deux mécanismes latéraux équipant un soufflet selon l'invention pour passerelle d'embarquement et/ou de débarquement de passagers d'un avion. Le soufflet 10, constitué à la manière d'un soufflet en accordéon, forme la partie avant d'une passerelle rigide, P, en forme de tunnel dont le plancher est montré en p et le toit en t. L'extrémité arrière du soufflet 10 pénètre légèrement dans le tunnel de la passerelle et est fixée à cette dernière sur un cadre périphérique 11. Le soufflet qui, de façon en soi connue, est réalisé en un tissu caoutchouté ou analogue, est muni à son extrémité avant d'un bourrelet d'étanchéité 12, désigné dans la technique sous son nom anglais de "bumper" ou de pare-choc, et qui est en un matériau souple, déformable élastiquement, pour ne pas endommager le fuselage de l'avion avec lequel il coopère dans la condition déployée du soufflet.

Pour la mise en oeuvre de ce dernier, l'invention prévoit de lui associer un dispositif d'actionnement constitué par deux mécanismes articulés, indépendants l'un de l'autre, prévus sur les faces en regard 14 et 15 du soufflet qui encadrent une porte de l'avion dans la condition opératoire en laquelle le soufflet est appliqué sur le fuselage de l'avion pour empêcher que les intempéries, comme la pluie, le vent, la neige, etc... ne gênent l'embarquement/débarquement des passagers ou ne pénètrent dans l'appareil. Chaque mécanisme latéral 20 comprend essentiellement un compas 21, à branches 22 et 23 articulées sur le cadre 11 et la partie haute du soufflet 10, comme montré en 24 et 25, respectivement, la tête articulée du compas étant, quant à elle, montrée en 26.

Sur cette tête 26 du compas 21 est attelée la tige 27 d'un vérin 28 dont le corps 29 est d'inclinaison réglable sur le cadre 11 de la passerelle par l'intermédiaire d'un montage 30 de ses tenons sur des bagues ou tourillons en polytétrafluoroéthylène (Téflon, une Marque déposée de la Société DUPONT DE NEMOURS). Avantageusement, comme illustré, le montage 30 d'articulation de la tige 27 du vérin 28 est proche de son extrémité opposée à la tête du compas, son extrémité inférieure dans l'exemple illustré. Le montage 30 permet l'articulation de la tige 27 du vérin 28 sans pour autant se trouver à l'extrémité de cette tige qui est disponible pour le montage d'un moteur 31. Avantageusement, comme illustré, l'axe du moteur 31 se trouve dans le prolongement de la tige 27 du vérin 28. Le moteur 31 subit ainsi un basculement lors du déploiement et du repliement du soufflet selon l'invention.

Dans la réalisation décrite et représentée, le vérin 28 est un vérin à vis, à commande électrique par un moteur frein 31, et est muni d'un limiteur d'effort intégré, ou d'un contact de fin de course, réglable à la sortie et à la rentrée de la tige, laquelle est avantageusement en acier inoxydable.

Celle-ci est articulée sur la tête 26 du compas 21 par une chape (non représentée), les axes d'articulation dudit compas étant eux aussi en acier inoxydable, tandis que les branches 22 et 23 sont de préférence réalisées à l'aide de barres tubulaires équipées à leurs extrémités de rotules à bouts filetés, permettant d'ajuster l'entre-axes des barres.

En variante, le vérin 28 est un vérin hydraulique.

Le fonctionnement d'un dispositif selon l'invention résulte immédiatement de ce qui précède.

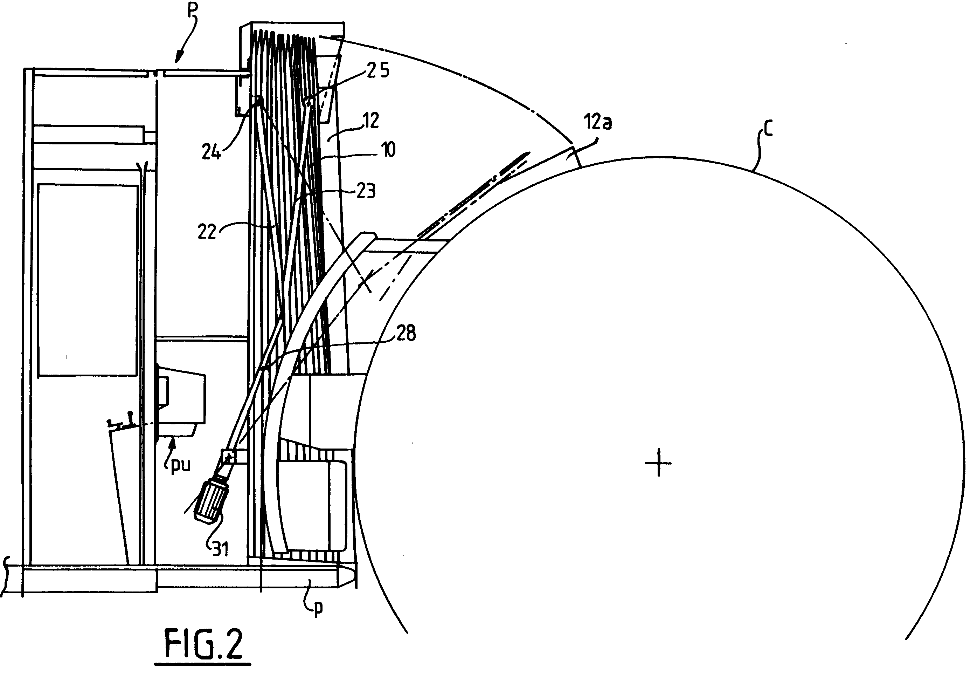

Dans la condition de repos, qui est celle montrée en trait plein sur la figure 2, le soufflet 10 est replié sur lui-même, et chacun des mécanismes 20 des faces latérales 14 et 15 du soufflet est dans la condition montrée en trait plein sur la figure 1, c'est-à-dire avec la vis du vérin 28 logée dans le corps de celui-ci et les branches 22 et 23 du compas 21 relativement proches l'une de l'autre définissant un angle au sommet du compas de faible valeur.

Lorsque le soufflet 10 doit être amené au contact de la carlingue C de l'avion, figure 2, l'opérateur active un dispositif de commande de sortie, par exemple il enfonce sur un pupitre pu de commande de la passerelle P un bouton "sortie", s : les deux tiges 27 des vérins 28 sortent alors simultanément provoquant le déploiement des compas 21 dont les branches occupent alors les positions montrées en 22a et 23a sur la figure 1, c'est-à-dire avec un angle d'ouverture au sommet relativement important. Le déploiement des compas entraîne celui du soufflet 10, jusqu'à ce que le pare-choc 12 vienne au contact de la carlingue C de l'avion. Dès que le pare-choc associé à l'une des faces latérales 14 ou 15 du soufflet est au contact de l'appareil, le limiteur d'effort (ou le contact de fin de course) associé au vérin correspondant arrête le mouvement de la tige 27 du vérin, l'autre face latérale du soufflet continuant sa course jusqu'à ce qu'elle vienne elle-même au contact de ladite carlingue. L'appui sur le bouton s est alors relâché et le soufflet 10 est immobilisé sur l'appareil avec le bourrelet 12 dans la condition montrée en 12a, sur la figure 2. Le maintien en position déployée du soufflet est obtenu par la combinaison des moteurs frein 31 avec les vérins électriques à vis dont les alimentations sont interrompues dès que le limiteur d'effort (ou un contact de fin de course) associé à un vérin devient opératoire.

Lors du retour du soufflet 10 à sa condition de repos, par actionnement d'un dispositif de commande de repliement, par exemple d'un bouton de rentrée r, sur le pupitre de commande pu, les deux mécanismes 20 ramènent simultanément les compas 21 vers leurs positions initiales, en lesquelles un limiteur d'effort (ou un contact de fin de course) devenant opératoire à la rentrée de la tige 27 dans le vérin assure le recalage du dispositif.

Ce dernier peut être réalisé sous forme d'un élément autonome propre à être associé à toute passerelle d'accès à un avion, indépendamment de la structure de cette dernière, de sorte qu'il peut équiper une telle passerelle lors de sa fabrication, ou être prévu en remplacement d'un dispositif existant.

Sa simplicité et l'accessibilité de tous ses organes constitutifs permettent un entretien extrêmement simple et, en cas de nécessité, un démontage et un remontage rapides.

L'absence de glissières, de treuils ou d'organes analogues permet d'obtenir un fonctionnement sans aléas auquel contribue le fait que le dispositif ne met en oeuvre aucune pièce d'usure, en raison de l'absence de tout frottement.

De bons résultats ont été obtenus dans un dispositif fournissant un fonctionnement silencieux (inférieur à 60db), pendant $1,7.10^5$ manoeuvres, avec des vérins à vis usuels d'une force de 150 kilos et dont les tiges avaient une course de l'ordre de 700 mm.

**Revendications**

1. Soufflet pour passerelle d'embarquement/débarquement des passagers d'un avion, propre à être appliqué avec interposition d'un bourrelet périphérique (12) d'étanchéité sur le fuselage de l'avion en réponse à l'actionnement de deux mécanismes articulés prévus sur les faces en regard (14,15) du soufflet (10), chacun des mécanismes (20) étant constitué par un compas (21) dont les branches (22, 23) sont articulées sur le cadre (11) de la passerelle (P), d'une part, et sur la partie haute du soufflet, d'autre part, caractérisé en ce que ledit soufflet est un soufflet de protection contre les intempéries, en ce que les deux mécanismes sont indépendants l'un de l'autre et en ce que la tête (26) du compas (21) est attelée sur la tige (27) d'un vérin (28) dont le corps est d'inclinaison réglable sur le cadre de la passerelle.

2. Soufflet pour passerelle d'embarquement/débarquement selon la revendication 1, caractérisé en ce que ledit soufflet est motorisé en vue de son déploiement et de son repliement.

3. Soufflet pour passerelle d'embarquement/débarquement selon la revendication 1 ou 2, caractérisé en ce que le compas (21) est réalisé à l'aide de barres tubulaires, munies à leurs extrémités de rotules à bouts filetés permettant d'ajuster l'entre-axe des barres.

4. Soufflet pour passerelle d'embarquement/débarquement selon l'une quelconque des revendications précédentes, caractérisé en ce que la tête (26) de compas (21) est reliée à la tige (27) du vérin (28) par une chape, tandis que l'inclinaison variable du corps de vérin est obtenu par un montage articulé (30) des tenons dudit corps sur un support notamment muni de bagues en polytétrafluoroéthylène.

5. Soufflet pour passerelle d'embarquement/débarquement selon l'une quelconque des revendications précédentes, caractérisé en ce que le vérin (28) est un vérin à vis, à commande électrique, muni d'un limiteur d'effort incorporé (ou d'un contact de fin de course) réglable à la sortie et à la rentrée de la tige (27) dans le corps de vérin.

6. Soufflet pour passerelle d'embarquement/débarquement selon la revendication 5, caractérisé en ce que le moteur (31) du vérin à vis (28) est un moteur frein.

7. Soufflet pour passerelle d'embarquement/débarquement selon l'une quelconque des revendications 1 à 4, caractérisé en ce que le vérin (28) est un vérin hydraulique.

8. Soufflet selon l'une quelconque des revendications 2 à 7, caractérisé en ce que le moteur (31) est disposé à l'extrémité opposée à la tête du compas (21) de la tige (27) du vérin (28).

9. Passerelle d'embarquement/débarquement de passagers d'un avion, caractérisée en ce qu'elle comprend un soufflet selon l'une quelconque des revendications précédentes.

10. Passerelle selon la revendication 9, caractérisée en ce qu'elle comporte un pupitre de commande (pu) comportant un dispositif de commande de déplacement du soufflet, notamment un bouton (s) de commande de déploiement du soufflet et un bouton (r) de commande du repliement du soufflet.

## FIG.1

## FIG.3

EP 0 498 692 A1

FIG.2

EP 0 498 692 A1

Office européen
des brevets

**RAPPORT DE RECHERCHE EUROPEENNE**

Numero de la demande

EP 92 40 0203

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl.5) |
| Y | US-A-4 333 195 (LICHTI) * Colonne 3, ligne 54 - colonne 4, ligne 14 * | 1,2 | B 64 F 1/305 |
| A | --- | 4,7,9 | |
| Y | US-A-4 120 067 (HONE) * Colonne 2, lignes 35-44 * & FR-A-2 419 860 (HONE) (Cat. D) | 1,2 | |
| A | --- | 5 | |
| A | US-A-3 843 987 (LODJIC) * Colonne 3, lignes 38-65 * --- | 5,6 | |
| A | FR-A-1 267 497 (STANRAY CORP.) * Page 2, colonne de droite, lignes 43-54 * ----- | 10 | |
| | | | **DOMAINES TECHNIQUES RECHERCHES (Int. Cl.5)** |
| | | | B 64 F |
| | Le présent rapport a été établi pour toutes les revendications | | |

| Lieu de la recherche | Date d'achèvement de la recherche | Examinateur |
|---|---|---|
| LA HAYE | 07-05-1992 | HAUGLUSTAINE H.F.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)